(19) Europäisches Patentamt
European Patent Office
Office européen des brevets

(11) **EP 3 715 050 A1**

(12) **EUROPÄISCHE PATENTANMELDUNG**

(43) Veröffentlichungstag:
**30.09.2020 Patentblatt 2020/40**

(51) Int Cl.:
*B23Q 11/00* (2006.01)     *G05B 19/404* (2006.01)

(21) Anmeldenummer: **19166207.1**

(22) Anmeldetag: **29.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Klotzek, Andreas**
  **91052 Erlangen (DE)**
• **Stoiber, Dietmar**
  **90763 Fürth (DE)**

(54) **VORRICHTUNG UND VERFAHREN ZUM AKTIVEN DÄMPFEN VON SCHWINGUNGEN EINES MASCHINENELEMENTS SOWIE WERKZEUGMASCHINENEINRICHTUNG MIT WENIGSTENS EINER SOLCHEN VORRICHTUNG**

(57)     Die Erfindung betrifft eine Vorrichtung (20) zum aktiven Dämpfen von Schwingungen wenigstens eines Maschinenelements (18). Die Vorrichtung (20) weist zwei Dämpfungselemente (30, 32) auf, welche um jeweilige Drehachsen (22, 24) relativ zu dem Maschinenelement (18) drehbar sind und jeweils eine Unwucht (26, 28) aufweisen. Die Vorrichtung (20) umfasst auch eine Antriebseinrichtung (34), mittels welcher die Dämpfungselemente (30, 32) antreibbar und dadurch gegensinnig um die Drehachsen (22, 24) drehbar sind. Hierdurch ist eine in einer senkrecht zu den Drehachsen verlaufenden Ebene wirkende Kraft zum Dämpfen der Schwingungen erzeugbar. Außerdem umfasst die Vorrichtung (20) eine Stelleinrichtung (40), mittels welcher die Dämpfungselemente (30, 32) relativ zueinander phasenverstellbar sind, wodurch eine in der Ebene verlaufende Wirkrichtung der Kraft einstellbar ist.

FIG 1

**Beschreibung**

Die Erfindung betrifft eine Vorrichtung und ein Verfahren zum aktiven Dämpfen von Schwingungen wenigstens eines Maschinenelements. Die Erfindung betrifft ferner eine Werkzeugmaschineneinrichtung mit wenigstens einer solchen Vorrichtung und mit wenigstens einer Werkzeugmaschine.

Aus dem allgemeinen Stand der Technik ist es bekannt, dass Maschinen während ihres Betriebs zu Schwingungen neigen, insbesondere dann, wenn die jeweilige Maschine generell Bauteile aufweist, welche sich während des Betriebs relativ zueinander bewegen beziehungsweise relativ zueinander bewegt werden. Dies gilt insbesondere für Maschinen, insbesondere Werkzeugmaschinen, welche zum, insbesondere mechanischen, Bearbeiten von Werkstücken verwendet werden. Insbesondere solche Maschinen, die zur Schwerzerspanung und/oder für andere Bearbeitungen genutzt werden, können während ihres Betriebs stark schwingen. Starke Schwingungen treten vor allem bei solchen Maschinen, insbesondere Werkzeugmaschinen, auf, die eine hohe dynamische Nachgiebigkeit aufweisen. Derartige, starke Schwingungen können zu unerwünschten und unangenehmen Geräuschen führen. Unter Rattern wird ein instabiler oder manchmal auch grenzstabiler Bearbeitungsprozess verstanden. Der Instabile Prozess kann zur Zerstörung von Werkzeugen und einer schlechten Qualität des bearbeiteten Werkstücks führen. Der Prozess kann dann in diesem Arbeitspunkt nicht gefahren werden. Eine übliche Gegenmaßnahme ist eine Reduktion der Leistung, zum Beispiel durch geringere Vorschübe oder geringere Spantiefe. Außerdem können Schwingungen zur Instabilität eines gewünschten, mit der jeweiligen Maschine durchzuführenden Prozesses führen, wobei diese übermäßigen Schwingungen die Leistungsfähigkeit der jeweiligen Maschine begrenzen können. Relevante Schwingformen können dabei, insbesondere je nach Maschinenstruktur, axial oder in mehreren Dimensionen und somit beispielsweise zweidimensional sein. Ein typisches Beispiel hierfür sind Achsen, die weit in einen Bearbeitungsraum ausgefahren werden können. Diese weisen oft eine kreisförmige Schwingform an ihrem Endeffektor, insbesondere an ihrem TCP (TCP - Tool Center Point - Werkzeugmittelpunkt) auf. Unter axial wird insbesondere verstanden, die Dimension, in oder entlang der die Schwingungen auftreten oder erfolgen, mit einer beweglichen Achse der Werkzeugmaschine zusammenfällt. Außerdem ist zu beachten, dass die Schwingungen im Laufe des Prozesses, das heißt im Laufe der Bearbeitung des jeweiligen Werkstücks, in der Richtung und Amplitude veränderlich sein können, zum Beispiel aufgrund Veränderungen der Bearbeitungsrichtung.

Aufgabe der vorliegenden Erfindung ist es daher, eine Vorrichtung, ein Verfahren und eine Werkzeugmaschineneinrichtung zu schaffen, sodass Schwingungen wenigstens eines Maschinenelements, insbesondere einer Maschine, besonders vorteilhaft gedämpft werden können.

Diese Aufgabe wird erfindungsgemäß durch eine Vorrichtung mit den Merkmalen des Patentanspruchs 1, durch eine Werkzeugmaschineneinrichtung mit den Merkmalen des Patentanspruchs 14 sowie durch ein Verfahren mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum aktiven Dämpfen von Schwingungen wenigstens eines Maschinenelements, insbesondere einer Maschine wie beispielsweise einer Werkzeugmaschine oder aber einer anderen Maschine. Insbesondere kann die Vorrichtung verwendet werden, um mehrdimensionale Schwingungen, insbesondere zweidimensionale Schwingungen, aktiv zu dämpfen, wobei die zweidimensionalen Schwingungen auch als 2D-Schwingungen bezeichnet werden. Unter solchen zweidimensionalen Schwingungen können Schwingungen verstanden werden, welche entlang einer ersten Achse oder ersten Richtung und entlang einer zweiten Achse beziehungsweise zweiten Richtung auftreten beziehungsweise verlaufen. Die Richtungen beziehungsweise die Achsen verlaufen beispielsweise senkrecht, insbesondere im Raum, zueinander. Eine der Achsen ist beispielsweise eine auch als erste Maschinenachse bezeichnete erste Achse der Werkzeugmaschine, wobei die zweite Achse beispielsweise eine auch als zweite Maschinenachse bezeichnete zweite Achse der Werkzeugmaschine ist. Die Werkzeugmaschine umfasst beispielsweise ein Werkzeug zum Bearbeiten eines Werkstücks, wobei das Werkzeug entlang der jeweiligen Maschinenachse bewegt werden kann.

Die Vorrichtung weist, insbesondere wenigstens oder genau, zwei um jeweilige Drehachsen relativ zu dem Maschinenelement drehbare Dämpfungselemente auf, welche jeweils eine Unwucht aufweisen. Das jeweilige Dämpfungselement kann beispielsweise als ein Scheiben beziehungsweise Dämpfungsscheibe ausgebildet sein. Die jeweilige Unwucht ist dabei eine gezielt beziehungsweise gewünscht vorgesehene, das heißt eine gezielt ausgebildete Unwucht des jeweiligen Dämpfungselements.

Die Vorrichtung umfasst außerdem eine Antriebseinrichtung, mittels welcher die Dämpfungselemente, insbesondere aktiv beziehungsweise gezielt oder gewünscht, antreibbar und dadurch gegensinnig um die Drehachsen drehbar sind, wodurch eine Kraft zum Dämpfen der Schwingungen erzeugbar ist, und wobei die Kraft in einer senkrecht zu den Drehachsen verlaufenden Ebene wirkt beziehungsweise verläuft. Insbesondere ist die Antriebseinrichtung vorzugsweise dazu ausgebildet, die Dämpfungselemente, insbesondere aktiv beziehungsweise gezielt oder gewünscht, anzutreiben und dadurch gleichzeitig und gegensinnig um die Drehachsen zu drehen, wodurch die in der senkrecht zu den Drehachsen verlaufenden Ebene wirkende Kraft zum Dämpfen der Schwingungen erzeugbar ist. Insbesondere können die beiden Dämpfungselemente unabhängig drehbar sein, wobei es vorteilhaft ist, die Dämpfungselemente in einer gekoppelten Bewegung beziehungsweise Drehung zu betreiben.

Die Vorrichtung umfasst darüber hinaus eine Stelleinrichtung, mittels welcher die Dämpfungselemente relativ zueinander phasenverstellbar sind, wodurch eine in der Ebene verlaufende Wirkrichtung der Kraft einstellbar ist. Insbesondere können die Dämpfungselemente mittels der Stelleinrichtung relativ zueinander phasenverstellt werden, während sich die Dämpfungselemente drehen, wodurch die in der Ebene verlaufende Wirkrichtung der Kraft eingestellt, das heißt variiert beziehungsweise verändert werden kann. Mit anderen Worten können die Dämpfungselemente in ihrer jeweiligen, auch als Drehphase bezeichneten Phase mittels der Stelleinrichtung relativ zueinander verstellt werden. Ein Verstellen der Phasen der Dämpfungselemente relativ zueinander wird auch als Phasenverstellung bezeichnet, welche mittels der Stelleinrichtung bewirkbar ist. Die Dämpfungselemente werden beispielsweise in ihren Phasen derart mittels der Stelleinrichtung relativ zueinander verstellt, dass die Stelleinrichtung bewirkt, dass eines der Dämpfungselemente zumindest oder ausschließlich vorübergehend mit einer anderen Drehbeschleunigung beziehungsweise mit einer anderen Drehzahl oder Drehgeschwindigkeit um die Drehachse gedreht wird als das andere Dämpfungselement.

Unter dem Merkmal, dass die Dämpfungselemente gegensinnig drehbar sind beziehungsweise gedreht werden, kann insbesondere verstanden werden, dass die Dämpfungselemente widersinnig beziehungsweise spiegelbildlich zueinander antreibbar beziehungsweise drehbar sind. Dies bedeutet beispielsweise, dass während eines Betriebs der Vorrichtung eines der Dämpfungselemente bezogen auf eine Blickrichtung auf das eine Dämpfungselement in eine erste Drehrichtung drehbar ist beziehungsweise gedreht wird, während das andere Dämpfungselement bezogen auf dieselbe Blickrichtung in eine der ersten Dreheinrichtung entgegengesetzte zweite Dreheinrichtung drehbar ist beziehungsweise gedreht wird.

Insbesondere kann unter dem Merkmal, dass die Dämpfungselemente gegensinnig zueinander drehbar sind oder gedreht werden, verstanden werden, dass die beispielsweise als Scheiben, insbesondere als Drehscheiben, ausgebildeten Dämpfungselemente so bewegt beziehungsweise gedreht werden, dass eine erste Drehbeschleunigung eines der Dämpfungselemente, insbesondere stets, spiegelbildlich oder gegensinnig zu einer zweiten Drehbeschleunigung des anderen Dämpfungselements erfolgt beziehungsweise verläuft. Die erste Drehbeschleunigung und die zweite Drehbeschleunigung können beispielsweise, insbesondere je nach Ausgestaltung der Dämpfungselemente beziehungsweise der Unwuchten, betragsmäßig gleich sein, jedoch unterschiedliche Richtungen, insbesondere Drehrichtungen, aufweisen.

Wird beispielsweise die erste Drehbeschleunigung mit a1 bezeichnet, während die zweite Drehbeschleunigung mit a2 bezeichnet wird, wobei die jeweilige Drehbeschleunigung beispielsweise von der Zeit t abhängt, so kann das Merkmal, dass die Dämpfungselemente gegensinnig zueinander drehbar sind beziehungsweise gedreht werden, das heißt dass die Drehbeschleunigungen gegensinnig erfolgen, durch folgende Formel ausgedrückt werden:

$$a1(t) \ = \ -\alpha \cdot a2(t)$$

Mit $\alpha$ ist dabei eine feste, unveränderliche Zahl zu verstehen, die einem Verhältnis der Unwuchten der Dämpfungselemente zueinander entspricht. Wird somit beispielsweise die Unwucht des einen Dämpfungselements mit U1 und die Unwucht des anderen Dämpfungselements mit U2 bezeichnet, so ergibt sich beispielsweise $\alpha$ zu:

$$\alpha \ = \ U2/U1$$

Der Begriff "Unwucht" ist in der Technik eingeführt beziehungsweise aus dem allgemeinen Stand der Technik hinlänglich bekannt, was unter einer beziehungsweise der jeweiligen Unwucht zu verstehen ist. Insbesondere ist unter der jeweiligen Unwucht eine unsymmetrische Verteilung der Massen des jeweiligen, eine rotierenden beziehungsweise rotierbaren Körper darstellenden Dämpfungselements zu verstehen. Die physikalische Einheit der Unwucht ist beziehungsweise kg*m. Die jeweilige Unwucht beziehungsweise ihre Masse wird auch als Exzentermasse bezeichnet. Somit ist $\alpha$ ein Faktor, welcher insbesondere dann, wenn die Dämpfungselemente die gleiche beziehungsweise dieselbe Unwucht aufweisen, streng und konstant gleich 1 ist.

Insgesamt ist erkennbar, dass durch das Drehen der Dämpfungselemente die Kraft und somit ein Kraftvektor, welcher die Kraft, insbesondere die Wirkrichtung der Kraft und eine Amplitude der Kraft, beschreibt, erzeugt werden können, wobei der Kraftvektor in der genannten Ebene verläuft und in der Ebene bedarfsgerecht ausgerichtet, das heißt verändert werden kann. Dabei kann durch Verwendung der Dämpfungselemente mit den Unwuchten ein nach außen Drehmomentfreies System geschaffen werden.

Beispielsweise wird das jeweilige Dämpfungselement mit einer nicht konstanten beziehungsweise mit einer variierenden Drehzahl gedreht, wobei das jeweilige Dämpfungselement vorzugsweise mit einer Drehbeschleunigung gedreht wird. Unter einer Drehung oder Drehbewegung des jeweiligen Dämpfungselements beziehungsweise darunter, dass das jeweilige Dämpfungselement gedreht wird, muss nicht zwangsläufig eine oder mehrere vollständige Umdrehungen des jeweiligen Dämpfungselements verstanden werden, sondern es ist denkbar, dass das Dämpfungselement um weniger als 360 Grad, das heißt einen gegenüber 360 Grad geringeren Drehwinkel gedreht wird und/oder, insbesondere jeweils um weniger als 360 Grad beziehungsweise um den Drehwinkel, hin- und hergedreht wird.

Insgesamt ist erkennbar, dass die Kraft in eine gewisse beziehungsweise beliebige Richtung erzeugt werden kann. Dabei ist es denkbar, dass die gleiche Kraft beziehungsweise der gleiche Kraftvektor durch unterschiedliche Phasenstellungen, das heißt durch unterschiedliche Ausrichtungen der Dämpfungselemente relativ zueinander erzeugt werden kann. Die Erzeugung der Kraft ist ein gewünschter Effekt, der in zumindest nahezu jeder beliebigen Phasenstellung der Dämpfungselemente relativ zueinander erreicht werden kann. Befinden sich beispielsweise die Dämpfungselemente zunächst in einer initialen Ausrichtung relativ zueinander, so resultieren daraus die Kraft und deren Wirkrichtung. Im Laufe eines Prozess, das heißt beispielsweise im Laufe der Bearbeitung des Werkstücks, kann die Phase der Dämpfungselemente relativ zueinander verstellt werden, sodass die Dämpfungselemente in eine von der initialen Ausrichtung unterschiedliche Ausrichtung gebracht werden können. Somit ist es möglich, die initiale Ausrichtung einzustellen beziehungsweise auszuwählen, und die Ausrichtung der Dämpfungselemente und somit der Unwuchten relativ zueinander kann im Laufe eines Prozesses verändert werden, sollte dies aus gewissen Gründen von Vorteil sein.

Dadurch, dass das jeweilige Dämpfungselement schwingt, während es gedreht wird, übt das jeweilige Dämpfungselement eine auch als Dämpfungskraft bezeichnete Einzelkraft aus beziehungsweise das jeweilige Dämpfungselement stellt die Dämpfungskraft bereit. Somit stellt beispielsweise das erste Dämpfungselement eine erste Dämpfungskraft bereit, während das zweite Dämpfungselement eine zweite Dämpfungskraft bereitstellt. Die erste Dämpfungskraft und die zweite Dämpfungskraft wirken in der Ebene und können zu einer resultierenden Gesamtkraft, insbesondere zu einer resultierenden Gesamtdämpfungskraft, zusammengefasst werden beziehungsweise die erste Kraft und die zweite Kraft ergeben die zuvor genannte Gesamtkraft, insbesondere die zuvor genannte Gesamtdämpfungskraft. Die Gesamtdämpfungskraft ist die zuvor genannte, in der Ebene wirkende Kraft, welche gegen die Schwingungen des Maschinenelements wirkt, wodurch die Schwingungen des Maschinenelements gedämpft werden können. Mit anderen Worten wirken beispielsweise die jeweiligen Schwingungen der Dämpfungselemente den Schwingungen des Maschinenelements entgegen, wodurch die jeweiligen Schwingungen beispielsweise jeweils zumindest teilweise ausgelöscht werden. Dies bedeutet, dass dadurch die Schwingungen des Maschinenelements gedämpft werden.

Durch die Möglichkeit, die Dämpfungselemente in ihren Phasen relativ zueinander zu verstellen, besteht die Möglichkeit, die Gesamtkraft beziehungsweise den Kraftvektor in der Ebene auszurichten. Hierzu werden die Dämpfungselemente, insbesondere gleichsinnig, verdreht. Durch Ausrichten des Kraftvektors kann den Schwingungen des Maschinenelements gezielt und effektiv entgegengewirkt werden. Insbesondere ist es möglich, auf unterschiedliche Schwingungen und/oder auf sich während eines Betriebs ändernde Schwingungen des Maschinenelements zu reagieren und beispielsweise dann, wenn sich die Schwingungen des Maschinenelements ändern, die Phasen der Dämpfungselemente relativ zueinander und somit die Wirklinie der Gesamtkraft zu verstellen.

Unter der Phasenverstellung kann insbesondere verstanden werden, dass die Dämpfungselemente relativ zueinander verdreht werden, insbesondere nach Art einer, insbesondere elektronischen, Kurvenscheibe.

Die erfindungsgemäße Vorrichtung ermöglicht es somit, einstellbare und somit beispielsweise steuerbare oder regelbare periodische Kräfte auf das Maschinenelement auszuüben beziehungsweise zu übertagen, und dadurch die Schwingungen des Maschinenelements zu dämpfen. Bei der jeweiligen periodischen, auf das Maschinenelement übertragbaren Kraft handelt es sich beispielsweise um die zuvor beschriebene Gesamtkraft. Da sich die Dämpfungselemente periodisch bewegen beziehungsweise da die Dämpfungselemente schwingen, wenn sie um die Drehachse, insbesondere vollständig oder nur teilweise und somit weniger als 360 Grad, gedreht werden, tritt die jeweilige Kraft beispielsweise periodisch auf. Dies bedeutet beispielsweise das die Gesamtkraft periodisch auftritt, das heißt periodisch wirkt und somit periodisch schwingt. Insbesondere schwingt die Kraft beziehungsweise die Gesamtkraft mit einer Frequenz, welche beispielsweise einstellbar ist.

Beispielsweise ist die Frequenz der periodischen Kraft, insbesondere periodischen Gesamtkraft, geringer als 100 Hertz. Beispielsweise beträgt die periodische Kraft, insbesondere periodische Gesamtkraft, 30 Hertz oder höchstens 30 Hertz. Die Kräfte werden, vorzugsweise über eine Regeleinrichtung, so eingestellt beziehungsweise so gesteuert oder geregelt, dass sie störenden Bewegungen des Maschinenelements und somit unerwünschten Effekten wie unerwünschten Geräuschen, Rattern, Vibration et cetera entgegenwirken.

Vorzugsweise ist es vorgesehen, dass die Vorrichtung keine eigene Verbindung zu einem Fundament hat, an welchem beispielsweise die das Maschinenelement umfassende Maschine gehalten ist beziehungsweise auf dem die Maschine steht. Somit ist es vorzugsweise vorgesehen, dass die Vorrichtung ausschließlich über die Maschine an dem Fundament abgestützt ist beziehungsweise auf dem Fundament steht. Dadurch können unerwünschte Effekte vermieden werden.

Um die Schwingung des Maschinenelements besonders vorteilhaft und insbesondere besonders bauraumgünstig dämpfen zu können, ist es in vorteilhafter Ausgestaltung der Erfindung vorgesehen, dass die Drehachsen der Dämpfungselemente miteinander zusammenfallen. Somit liegen die Drehachsen der Dämpfungselemente auf einer gemeinsamen Gesamtdrehachse beziehungsweise die Gesamtdrehachse bildet die Drehachsen der Dämpfungselemente.

In weiterer Ausgestaltung der Erfindung vorgesehen, dass die Drehachsen voneinander beabstandet sind und zumindest im Wesentlichen parallel zueinander verlaufen.

Eine weitere Ausführungsform zeichnet sich dadurch aus, dass die Vorrichtung eine elektronische Recheneinrichtung umfasst. Die elektronische Recheneinrichtung ist beziehungsweise bildet beispielsweise die zuvor genannte Regeleinrichtung. Insbesondere ist es denkbar, dass die elektronische Recheneinrichtung dazu ausgebildet ist, die jeweilige Drehzahl und/oder Drehgeschwindigkeit und/oder Drehbeschleunigung, mit welcher das jeweilige Dämpfungselement um die jeweilige Drehachse drehbar ist beziehungsweise gedreht wird, einzustellen. Ferner ist es denkbar, dass die elektronische Recheneinrichtung dazu ausgebildet ist, die eine beziehungsweise die Phasenverstellung der Dämpfungselemente zu bewirken und dadurch den Kraftvektor in der Ebene auszurichten.

Beispielsweise bewegen beziehungsweise drehen sich die Dämpfungselemente periodisch wiederholt gleich, insbesondere bis eine Änderung, zum Beispiel durch eine Einstellung oder Verstellung der Phase zueinander erfolgt. Außerdem dienen die Dämpfungselemente dazu, das Maschinenelement zu dämpfen. Dies bedeutet, dass die Dämpfungselemente insbesondere im Hinblick auf ihre Phase auf eine aufschwingende Bewegung reagieren, durch die aufschwingende Bewegung sofort bedämpft wird und die Eigenbewegung also nur bedingt periodisch ist.

Eine weitere Ausführungsform zeichnet sich dadurch aus, dass die elektronische Recheneinrichtung dazu ausgebildet ist, die Antriebseinrichtung anzusteuern und dadurch zu betreiben, insbesondere zu steuern oder zu regeln. Dadurch kann die Gesamtkraft insbesondere im Hinblick auf deren Wirklinie und somit Wirkrichtung besonders gezielt und bedarfsgerecht sowie während des Betriebs der Vorrichtung eingestellt, das heißt variiert werden. Hierdurch kann die Schwingung des Maschinenelements effektiv und effizient gedämpft werden.

Bei einer besonders vorteilhaften Ausführungsform der Erfindung weist die Vorrichtung, insbesondere wenigstens oder genau einen Schwingungssensor auf, mittels welchem entlang wenigstens oder genau zweier Achsen verlaufende Schwingungen des Maschinenelements erfassbar sind und wenigstens ein die erfassten Schwingungen charakterisierendes, insbesondere elektrisches, Signal bereitstellbar ist. Mit anderen Worten ist der Schwingungssensor dazu ausgebildet, Schwingungen zu erfassen, die entlang wenigstens oder genau zweier, senkrecht zueinander verlaufender Achsen verlaufen. Somit ist der Schwingungssensor dazu ausgebildet, zweidimensionale Schwingungen, das heißt 2D-Schwingungen zu erfassen. Die elektronische Recheneinrichtung ist dabei dazu ausgebildet, das von dem Schwingungssensor bereitgestellte Signal zu empfangen und die Antriebseinrichtung in Abhängigkeit von dem Signal anzusteuern. Dadurch kann den Schwingungen des Maschinenelements gezielt und effektiv sowie effizient entgegengewirkt werden. Der Schwingungssensor ist beispielsweise als Beschleunigungssensor oder aber als Geschwindigkeitssensor ausgebildet. Insbesondere ist es vorgesehen, dass der Schwingungssensor, insbesondere direkt, an dem Maschinenelement befestigbar oder befestigt ist.

Bei einer weiteren Ausführungsform der Erfindung ist es vorgesehen, dass die elektronische Recheneinrichtung Bestandteil der Stelleinrichtung ist. Somit kann beispielsweise die elektronische Recheneinrichtung die Antriebseinrichtung, insbesondere in Abhängigkeit von dem Signal, ansteuern, um dadurch die Dämpfungselemente relativ zueinander phasenzuverstellen und/oder die Amplitude und/oder Frequenz der Kraft beziehungsweise des Kraftvektors einzustellen, insbesondere zu steuern oder zu regeln.

Um eine besonders effektive Schwingungsdämpfung zu realisieren, ist es in weiterer Ausgestaltung der Erfindung vorgesehen, dass einem ersten der Dämpfungselemente ein erster Elektromotor zugeordnet ist, mittels welchem das erste Dämpfungselement antreibbar ist. Dem zweiten Dämpfungselement ist ein zweiter Elektromotor zugeordnet, mittels welchem das zweite Dämpfungselement antreibbar ist. Insbesondere ist es vorgesehen, dass mittels des ersten Elektromotors bezogen auf die Dämpfungselemente ausschließlich das erste Dämpfungselement antreibbar ist. Alternativ oder zusätzlich ist es vorzugsweise vorgesehen, dass mittels des zweiten Elektromotors bezogen auf die Dämpfungselemente ausschließlich das zweite Dämpfungselement antreibbar ist. Dabei ist die elektronische Recheneinrichtung vorzugsweise dazu ausgebildet, die Elektromotoren anzusteuern und somit zu betreiben, insbesondere zu steuern oder zu regeln.

Um die jeweiligen Phasen der Dämpfungselemente, insbesondere relativ zueinander, besonders präzise einstellen zu können, ist es in weiterer Ausgestaltung der Erfindung vorgesehen, dass die elektronische Recheneinrichtung dazu ausgebildet ist, die Elektromotoren anzusteuern und dadurch die Phasenverstellung beziehungsweise eine Phasenverstellung der Dämpfungselemente relativ zueinander zu bewirken. Dadurch können die Schwingungen des Maschinenelements besonders effektiv gedämpft werden. Hierbei kann vorgesehen sein, dass die Phasenverstellung ausschließlich durch Ansteuerung der Motoren und somit ausschließlich ansteuer- beziehungsweise signaltechnisch bewirkbar ist. Dadurch kann beispielsweise der Einsatz weiterer, separater Aktoren zur Phasenverstellung vermieden werden.

Als besonders vorteilhaft hat es sich jedoch gezeigt, wenn die Stelleinrichtung, insbesondere wenigstens oder genau, einen zusätzlich zu der Antriebseinrichtung vorgesehenen Aktor aufweist, wobei die elektronische Recheneinrichtung dazu ausgebildet ist, den Aktor anzusteuern und dadurch eine Phasenverstellung der Dämpfungselemente relativ zueinander zu bewirken. Mit anderen Worten kann mittels des Aktors eine Phasenverstellung der Dämpfungselemente relativ zueinander bewirkt werden, insbesondere durch Ansteuern des Aktors. Wieder mit anderen Worten ausgedrückt kann durch die elektronische Recheneinrichtung eine Phasenverstellung der Dämpfungselemente relativ zueinander bewirkt werden, indem die elektronische Recheneinrichtung den Aktor ansteuert und dadurch betreibt. Dadurch können die Phasen präzise eingestellt werden.

Um die Schwingungen des Maschinenelements bauraum-, gewichts- und kostengünstig sowie effektiv dämpfen zu können, ist es in weiterer Ausgestaltung der Erfindung vorgesehen, dass die Antriebseinrichtung, insbesondere genau, einen den Dämpfungselementen gemeinsamen Elektromotor zum Antreiben der beziehungsweise beider Dämpfungselemente umfasst.

Dabei hat es sich als besonders vorteilhaft gezeigt, wenn der eine Elektromotor einen Stator und einen von dem Stator antreibbaren und dadurch um eine Motordrehachse relativ zu dem Stator drehbaren Rotor aufweist. Fallen die Drehachsen der Dämpfungselemente zusammen, so ist es dabei vorzugsweise vorgesehen, dass die Motordrehachse mit den Drehachsen der Dämpfungselemente zusammenfällt, sodass der Elektromotor beziehungsweise dessen Rotor koaxial zu den Dämpfungselementen angeordnet ist, wobei die Dämpfungselemente koaxial zueinander angeordnet sind. Dabei ist eines der Dämpfungselemente drehfest mit dem Stator und das andere Dämpfungselement drehfest mit Rotor verbunden.

Um dabei die Schwingungen des Maschinenelements effektiv dämpfen zu können, sind der Rotor und der Stator, insbesondere im Raum, relativ zu dem Maschinenelement um die Motordrehachse drehbar, sodass beispielsweise während eines Betriebs der Vorrichtung sowohl der Stator als auch der Rotor um die Motordrehachse relativ zu dem Maschinenelement und dabei beispielsweise im Raum gedreht wird, insbesondere dadurch, dass der Stator den Rotor antreibt. Dieser Ausführungsform liegen insbesondere das folgende Prinzip und die folgende Idee zugrunde:

Ein auch als Motor bezeichneter Elektromotor, welcher ein Drehmoment auf seinen Rotor und somit beispielsweise auf eine Welle des Rotors ausübt, erzeugt unweigerlich, insbesondere exakt zur gleichen Zeit, ein Gegendrehmoment, insbesondere in exakt demselben Ausmaß, welches auf den Stator wirkt und beispielsweise dann, wenn eine Drehung des Stators unterbleiben soll, abgestützt ist beziehungsweise an einem ortsfesten Bauelement wie beispielsweise dem Maschinenelement. Dieses Prinzip ist gleich dem Prinzip Aktio = Reaktio. Mit anderen Worten, jedes Newtonmeter Drehmoment wird zweimal wirksam, einmal auf dem Rotor und einmal als prompte Gegenreaktion auf dem Stator, wobei das Drehmoment und das Gegendrehmoment in entgegengesetzte Richtungen, insbesondere in entgegengesetzte Drehrichtungen, wirken und somit einander entgegengesetzt sind. Da nun beispielsweise das eine Dämpfungselement drehfest mit dem Stator und das andere Dämpfungselement drehfest mit dem Rotor verbunden ist, dann ist, insbesondere automatisch, dafür gesorgt, dass die beiden Dämpfungselemente stets Drehmoment von exakt demselben Betrag aber in entgegengesetzter Richtung exakt gleichzeitig empfangen. Dabei ist noch sicherzustellen, dass die obige Gleichung

$$a1(t) = -\alpha \cdot a2(t)$$

erfüllt ist. Dies lässt sich durch eine entsprechende Dimensionierung derjenigen Trägheitsmomente der Dämpfungselemente und/oder des Stators und/oder des Rotors erreichen. Mit anderen Worten weist beispielsweise ein Verbund aus dem Stator und dem damit verbundenen eine Dämpfungselement eine erste Trägheit beziehungsweise ein erstes Trägheitsmoment auf, wobei ein Verbund aus dem Rotor und dem damit drehfest verbundenen anderen Dämpfungselement eine zweite Trägheit beziehungsweise ein zweites Trägheitsmoment aufweist. Beispielsweise wird das erste Trägheitsmoment mit T1 bezeichnet, während das zweite Trägheitsmoment mit T2 bezeichnet wird. Dabei werden beispielsweise die Dämpfungselemente, der Rotor und der Stator beziehungsweise ihre Trägheiten gemäß folgender Gleichung dimensioniert, das heißt ausgestaltet:

$$U1/T1 = U2/T2$$

Damit entfällt ein Synchronisierungsaufwand in der Steuerung oder Regelung, denn die Unwuchten beziehungsweise die durch die Unwuchten bewirkten Kräfte sind zwangläufig symmetrisch zueinander.

Um ein unerwünschtes Auseinanderdriften beziehungsweise Verstellen des Stators und des Rotors und somit der Dämpfungselemente gegeneinander beziehungsweise relativ zueinander zu verhindern, hat es sich als vorteilhaft gezeigt, wenn der Stator und der Rotor und somit die Dämpfungselemente über wenigstens oder genau eine Rückholfeder, insbesondere über wenigstens oder genau eine Torsionsfeder, miteinander gekoppelt sind. Mit anderen Worten kann eine schwache, beziehungsweise als Torsionsfeder ausgebildete Rückholfeder zwischen dem Rotor und dem Stator angebracht werden, um ein unerwünschtes Auseinanderdriften des Rotors und des Stators gegeneinander zu verhindern.

Ein zweiter Aspekt der Erfindung betrifft eine auch als Werkzeugmaschinenanlage bezeichnete Werkzeugmaschineneinrichtung, welche wenigstens eine Werkzeugmaschine zum, insbesondere mechanischen, Bearbeiten von Werkstücken umfasst. Insbesondere ist die Werkzeugmaschineneinrichtung zum spanenden Bearbeiten von Werkstücken ausgebildet. Die Werkzeugmaschineneinrichtung umfasst darüber hinaus eine Vorrichtung, insbesondere eine erfindungsgemäße Vorrichtung gemäß dem ersten Aspekt der Erfindung, zum aktiven Dämpfen von Schwingungen wenigstens eines Maschinenelements der Werkzeugmaschine. Dabei weist die Vorrichtung, insbesondere wenigstens oder genau, zwei um jeweilige Drehachsen relativ zu dem Maschinenelement drehbare und jeweils, insbesondere wenigstens oder genau, eine Unwucht aufweisende Dämpfungselemente auf. Außerdem umfasst die Vorrichtung eine Antriebseinrichtung, mittels welcher die Dämpfungselemente antreibbar und dadurch gegensinnig um die Drehachsen drehbar sind, wodurch eine in einer senkrecht zu den Drehachsen verlaufenden Ebene wirkende Kraft zum Dämpfen der Schwingungen erzeugbar ist.

Die Vorrichtung umfasst darüber hinaus eine Stelleinrichtung, mittels welcher die Dämpfungselemente relativ zueinander phasenverstellbar sind, wodurch eine in der Ebene verlaufende Wirkrichtung der Kraft einstellbar ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Beispielsweise ist die Vorrichtung zumindest mittelbar, insbesondere direkt, mit dem Maschinenelement gekoppelt, insbesondere an dem Maschinenelement gehalten, insbesondere derart, dass die Kräfte beziehungsweise die zuvor genannte Gesamtkraft zum Dämpfen der Schwingung des Maschinenelements von der Vorrichtung auf das Maschinenelement übertragbar sind beziehungsweise ist.

Die Werkzeugmaschine ist beispielsweise an einem Fundament abgestützt, wobei die Werkzeugmaschine beispielsweise auf dem Fundament steht. Dabei ist es vorzugsweise vorgesehen, dass die Vorrichtung ausschließlich über die Werkzeugmaschine an dem Fundament abgestützt ist, um beispielsweise eine unerwünschte Übertragung von statischen Kräften zu vermeiden.

Zur Erfindung soll auch eine Verwendung einer erfindungsgemäßen Vorrichtung gemäß dem ersten Aspekt der Erfindung gehören, wobei die Vorrichtung verwendet wird, um Schwingungen eines Maschinenelements einer Maschine, insbesondere einer Werkzeugmaschine zum, insbesondere mechanischen, Bearbeiten von Werkstücken, zu dämpfen.

Ein dritter Aspekt der Erfindung betrifft ein Verfahren zum aktiven Dämpfen von Schwingungen wenigstens eines Maschinenelements mittels einer Vorrichtung, insbesondere mittels einer erfindungsgemäßen Vorrichtung gemäß dem ersten Aspekt der Erfindung. Bei dem Verfahren werden, insbesondere wenigstens oder genau, zwei um jeweilige Drehachsen relativ zu dem Maschinenelement drehbare und jeweils, insbesondere wenigstens oder genau, eine Unwucht aufweisende Dämpfungselementen der Vorrichtung mittels einer Antriebseinrichtung der Vorrichtung angetrieben und dadurch gegensinnig um die Drehachsen gedreht, wodurch eine in einer senkrecht zu den Drehachsen verlaufenden Ebene wirkende Kraft zum Dämpfen der Schwingungen erzeugt wird. Beim Drehen der Dämpfungselemente werden diese beispielsweise um genau 360 Grad, ausschließlich um weniger als 360 Grad oder um mehr als 360 Grad gedreht beziehungsweise rotatorisch gedreht. Dabei werden mittels einer Stelleinrichtung der Vorrichtung die Dämpfungselemente, insbesondere vorübergehend, relativ zueinander phasenverstellt, wodurch eine in der Ebene verlaufende Wirkrichtung der Kraft eingestellt beziehungsweise verstellt wird. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

FIG 1 eine schematische Perspektivansicht einer erfindungsgemäßen Werkzeugmaschineneinrichtung mit einer ersten Ausführungsform einer Vorrichtung zum aktiven Dämpfen von Schwingungen wenigstens eines Maschinenelements einer Werkzeugmaschine der Werkzeugmaschineneinrichtung;

FIG 2 ausschnittsweise eine schematische Vorderansicht der Vorrichtung gemäß einer zweiten Ausführungsform;

FIG 3 ausschnittsweise ein schematische und perspektivische Seitenansicht der Vorrichtung gemäß einer dritten Ausführungsform;

FIG 4 eine schematische Darstellung einer möglichen Regelung der Vorrichtung; und

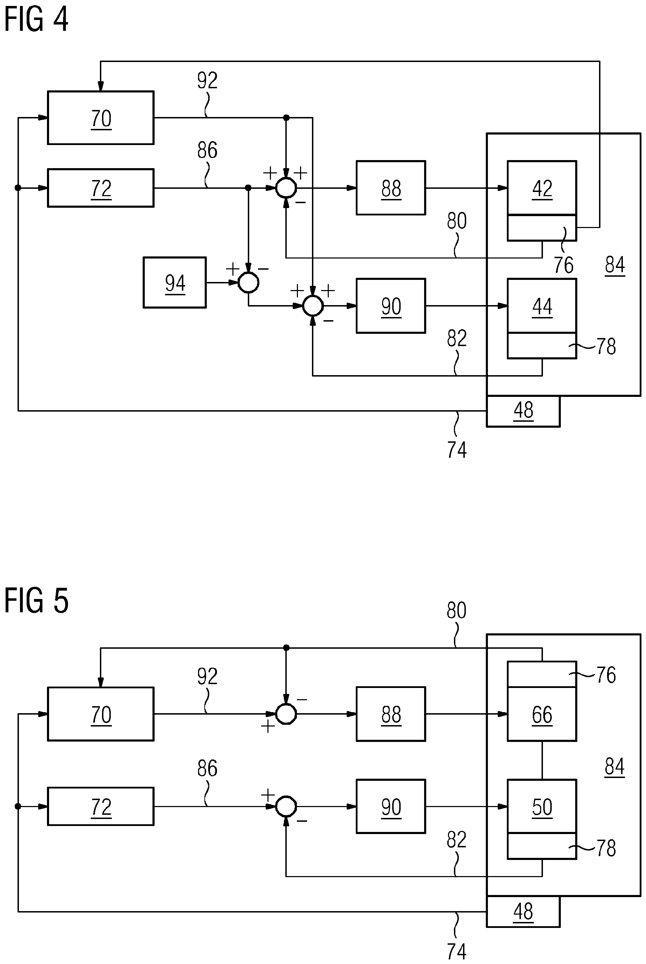

FIG 4 eine schematische Darstellung einer weiteren, möglichen Regelung der Vorrichtung.

In den Figuren sind gleiche oder funktionsgleiche Elemente mit gleichen Bezugszeichen versehen.

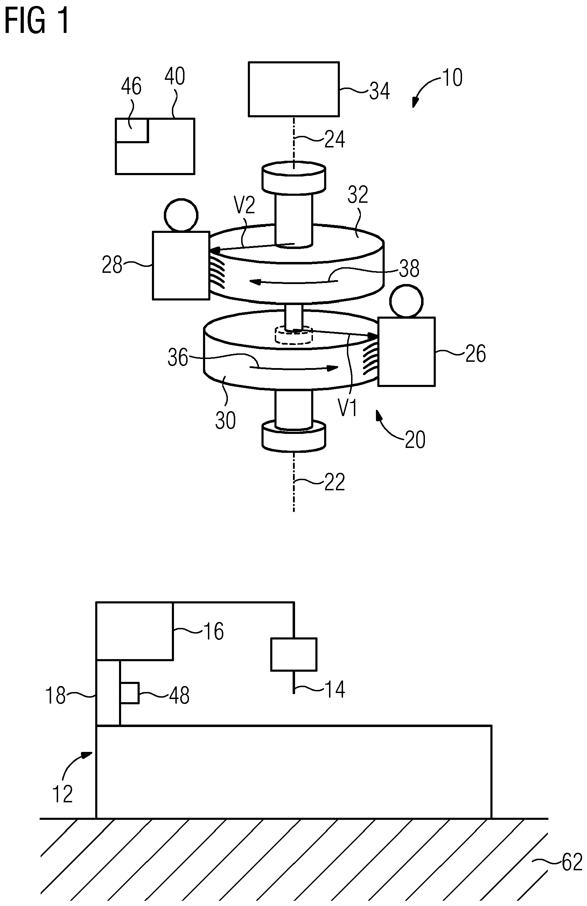

FIG 1 zeigt in einer schematischen Darstellung eine im Ganzen mit 10 bezeichnete Werkzeugmaschineneinrichtung zum, insbesondere mechanischen, Bearbeiten von Werkstücken. Hierzu umfasst die auch als Werkzeugmaschinenanlage bezeichnete Werkzeugmaschineneinrichtung 10 wenigstens oder genau eine Werkzeugmaschine 12, mittels welcher die Werkstücke, insbesondere zerspanend, bearbeitet werden können. Hierzu umfasst die Werkzeugmaschine 12 wenigstens ein Werkzeug 14 und wenigstens einen Antrieb 16. Mittels des Antriebs 16 können Relativbewegungen zwischen dem jeweiligen, zu bearbeitenden Werkstück und dem Werkzeug 14 bewegt werden, insbesondere während das Werkzeug 14 das Werkstück, insbesondere zumindest vorübergehend beziehungsweise intermittierend, berührt. Hierdurch wird das jeweilige Werkstück, insbesondere spanend, bearbeitet. Beispielsweise kann mittels der Werkzeugmaschine 12 eine Schwerzerspanung durchgeführt werden.

Beim Bearbeiten des jeweiligen Werkstücks können - falls keine entsprechenden Gegenmaßnahmen getroffen sind - Schwingungen wenigstens eines in FIG 1 besonders schematisch dargestellten Maschinenelements 18 der Werkzeugmaschine 12 auftreten. Mit anderen Worten kann es während des Bearbeitens dazu kommen, dass zumindest das Maschinenelement 18 der Werkzeugmaschine 12 stark schwingt. Hieraus können unerwünschte Effekte wie beispielsweise unerwünschte Geräusche, insbesondere Rattern, resultieren. Außerdem können die Schwingungen das Bearbeiten unerwünschter Weise beeinträchtigen und destabilisieren.

Um nun übermäßige Schwingungen des Maschinenelements 18 zu vermeiden und somit die Schwingungen des Maschinenelements 18 aktiv zu dämpfen, umfasst die Werkzeugmaschineneinrichtung 10 wenigstens oder genau eine Vorrichtung 20. FIG 1 zeigt eine erste Ausführungsform der Vorrichtung 20, mittels welcher die Schwingungen des Maschinenelements 18 aktiv und somit gezielt und gewünscht gedämpft werden können. Hierzu weist die Vorrichtung 20 genau zwei um jeweilige Drehachsen 22 und 24 relativ zu dem Maschinenelement 18 drehbare und jeweils eine Unwucht 26 beziehungsweise 28 aufweisende Dämpfungselemente 30 und 32 auf, welche vorliegend als Scheiben ausgebildet sind und auch als Drehscheiben bezeichnet werden. Die jeweilige Unwucht 26 beziehungsweise 28, insbesondere deren jeweilige Masse, wird auch als Exzentermasse oder Unwuchtmasse bezeichnet. Darunter kann insbesondere verstanden werden, dass die jeweilige Unwucht 26 beziehungsweise 28 an sich eine auch als Exzentermasse oder Unwuchtmasse bezeichnete Masse aufweist.

Die Vorrichtung 20 weist darüber hinaus ein in FIG 1 besonders schematisch dargestellte Antriebseinrichtung 34 auf, mittels welcher die Dämpfungselemente 30 und 32 antreibbar und dadurch gegensinnig um die Drehachsen 22 und 24 drehbar sind, wodurch eine in einer senkrecht zu den Drehachsen verlaufenden Ebene wirkende Kraft zum Dämpfen der Schwingungen erzeugbar ist. Bei der ersten Ausführungsform fallen die Drehachsen 22 und 24 zusammen, sodass die Dämpfungselemente 30 und 32 koaxial zueinander angeordnet sind. Unter dem Merkmal, dass die Dämpfungselemente 30 und 32 gegensinnig drehbar sind beziehungsweise gedreht werden, kann insbesondere verstanden werden, dass die Dämpfungselemente 30 und 32 widersinnig beziehungsweise spiegelbildlich zueinander drehbar sind beziehungsweise gedreht werden. Dies ist in FIG 1 durch Pfeile 36 und 38 veranschaulicht. Wie anhand des Pfeils 36 erkennbar ist, wird während eines Betriebs der Vorrichtung 20 das Dämpfungselement 30 mittels der Antriebseinrichtung 34 um die Drehachse 22 beziehungsweise 24 in eine erste Drehrichtung relativ zu dem Maschinenelement 18 gedreht, während das Dämpfungselement 32 mittels der Antriebseinrichtung 34 um die Drehachse 22 beziehungsweise 24 in eine der ersten Drehrichtung entgegengesetzte zweite Drehrichtung relativ zu dem Maschinenelement 18 gedreht wird.

Unter dem jeweiligen Drehen des jeweiligen Dämpfungselements 30 beziehungsweise 32 ist eine rotatorisch Bewegung zu verstehen, welche von dem jeweiligen Dämpfungselement 30 beziehungsweise 32 vorzugsweise mit einer Drehbeschleunigung, das heißt mit einer nicht konstanten Drehzahl beziehungsweise Drehgeschwindigkeit ausgeführt wird. Dabei veranschaulicht der Pfeil 36 die erste Drehrichtung, während der Pfeil 38 die zweite Drehrichtung veranschaulicht. Insbesondere ist es vorgesehen, dass die Dämpfungselemente 30 und 32 während des Betriebs der Vorrichtung 20 mittels der Antriebseinrichtung 34 mit der gleichen Drehbeschleunigung oder mit unterschiedlichen Drehbeschleunigungen gedreht werden. Beispielsweise während eines Zeitintervalls werden die Dämpfungselemente 30 und 32 in ihrer jeweiligen Phase relativ zueinander verstellt werden.

Die Vorrichtung 20 weist darüber hinaus eine in FIG 1 besonders schematisch dargestellte Stelleinrichtung 40 auf, mittels welcher die Dämpfungselemente 30 und 32 relativ zueinander phasenverstellbar sind, wodurch eine in der Ebene verlaufende Wirkrichtung der Kraft einstellbar ist. Dies bedeutet, dass mittels der Stelleinrichtung 40 eine Phasenverstellung der Dämpfungselemente 30 und 32 relativ zueinander bewirkt werden kann. Im Rahmen der Phasenverstellung werden die Dämpfungselemente 30 und 32 in ihren jeweiligen Phasen relativ zueinander verstellt.

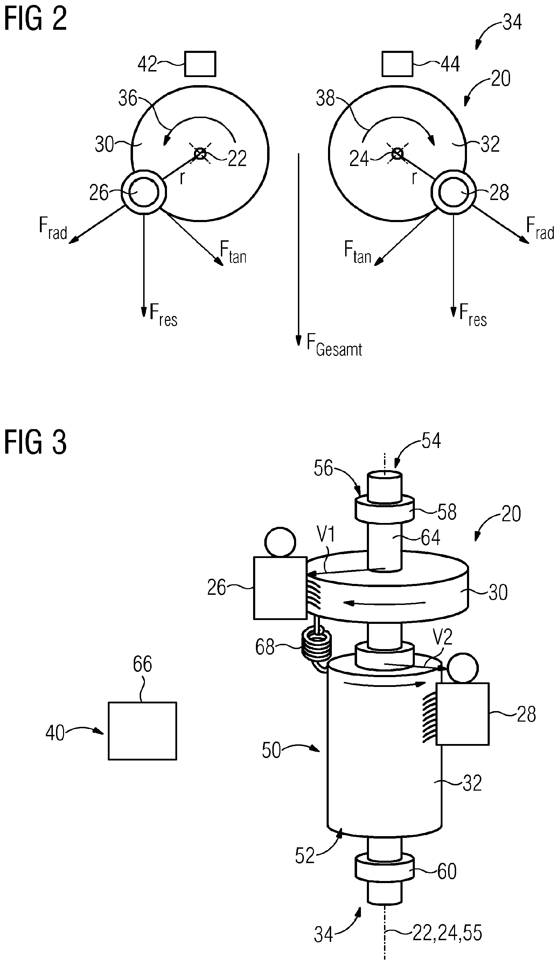

Grundsätzlich ist es denkbar, dass - wie aus FIG 2 erkennbar ist - die Drehachsen 22 und 24 voneinander beabstandet und somit desachsiert zueinander angeordnet sind, wobei jedoch die Drehachsen 22 und 24 zumindest im Wesentlichen parallel zueinander verlaufen. Während des Betriebs der Vorrichtung 20 werden die als Drehscheiben ausgebildeten Dämpfungselemente 30 und 32 nun so bewegt, das heißt so mittels der Antriebseinrichtung 34 und die Drehachsen 22 und 24 gedreht, dass beispielsweise eine Drehbeschleunigung des Dämpfungselements 30, insbesondere stets, gegensinnig zu einer Drehbeschleunigung des Dämpfungselements 32 erfolgt.

Die Drehbeschleunigung des Dämpfungselements 30 wird beispielsweise mit a1 bezeichnet, wobei die Drehbeschleunigung des Dämpfungselements 32 beziehungsweise mit a2 bezeichnet wird. Außerdem ist die jeweilige Drehbeschleunigung beispielsweise von der Zeit t abhängig. Das zuvor genannte Merkmal, dass die Drehbeschleunigungen gegensinnig zueinander erfolgen, kann beispielsweise durch folgende Formel oder Gleichung ausgedrückt werden:

$$a1(t) = -\alpha \cdot a2(t)$$

Mit $\alpha$ ist dabei ein Faktor bezeichnet, welcher beispielsweise eine feste, unveränderliche Zahl ist, die dem Verhältnis der Unwuchten 26 und 28 zueinander entspricht. Wird beispielsweise die Unwucht 26 beziehungsweise deren Masse mit U1 bezeichnet, während die Unwucht 28 beziehungsweise deren Masse mit U2 bezeichnet wird, so ergibt sich beispielsweise der Faktor $\alpha$ zu:

$$\alpha = U2/U1$$

Die physikalische Einheit der jeweiligen Unwucht 26 beziehungsweise 28, insbesondere ihrer jeweiligen Masse, ist beispielsweise kg*m. Haben beide Drehscheiben dieselbe beziehungsweise die gleiche Unwucht beziehungsweise Unwuchtmasse, dann ist der Faktor $\alpha$ streng und konstant = 1. Die Schwingungen des Maschinenelements 18 können beispielsweise auf Basis eines Prinzips mittels der Vorrichtung 20 aktiv gedämpft werden, wobei das genannte Prinzip im Folgenden unter folgenden, vereinfachenden Annahmen erläutert wird:

- Beide Drehscheiben haben dasselbe Trägheitsmoment.
- Beide Drehscheiben haben dieselbe Unwucht in der Einheit kg*m.
- Die Drehachsen 22 und 24 beider Drehscheiben fallen zusammen und liegen somit auf einer gemeinsamen Linie beziehungsweise Geraden.
- Jeweilige Neutralpositionen der Drehscheiben seien so ausgerichtet, dass sie einander entgegen zeigen, wie es in FIG 1 symbolisch dargestellt ist.

Unter der jeweiligen Neutralposition ist ein auch als Winkel-Null-Durchgang bezeichneter Null-Durchgang einer jeweiligen periodischen Drehbewegung der jeweiligen Drehscheibe beziehungsweise der jeweiligen Unwucht 26 beziehungsweise 28 zu verstehen. Insbesondere ist unter der jeweiligen Neutralposition insbesondere die Drehstellung, das heißt die Drehwinkelposition zu verstehen, welche derjenige gedachte Vektor V1 beziehungsweise V2 einnimmt, der die jeweilige Drehachse 22 beziehungsweise 24 mit der jeweiligen Unwucht 26 beziehungsweise 28, insbesondere mit deren Gewichtsschwerpunkt verbindet. Der Gewichtsschwerpunkt wird auch als Schwerpunkt oder Massenmittelpunkt bezeichnet.

Wird nun eine jeweilige Drehbeschleunigung auf die jeweilige Drehscheibe appliziert, dann führt die jeweilige Unwucht 26 beziehungsweise 28 dazu, dass eine Kraft auf ein jeweiliges Lager übertragen wird, über welches beispielsweise die jeweilige Drehscheibe, insbesondere drehbar, an dem Maschinenelement 18 gelagert ist. Mit anderen Worten kann am Lager eine Abstützung der jeweiligen Drehachse 22 beziehungsweise 24 an oder zu dem Maschinenelement 18 verstanden werden. Somit wirkt die zuvor genannte Kraft auf das Maschinenelement 18. Insbesondere steht die Kraft senkrecht zur jeweiligen Position der jeweiligen Unwucht 26 beziehungsweise 28. Zur Verdeutlichung sei an dieser Stelle nochmals erwähnt, dass unter der Position der zuvor beschriebene Vektor und somit eine Verbindungslinie, insbesondere eine Verbindungsgerade, zwischen der jeweiligen Drehachse 22 beziehungsweise 24 und dem Schwerpunkt der jeweiligen Unwucht 26 beziehungsweise 28 zu verstehen ist. Somit ist beispielsweise unter der jeweiligen Position der jeweilige Vektor V1 beziehungsweise V2 zu verstehen. Wenn die Beschleunigung periodisch ist, wendet sie nach kurzer Zeit ihre Richtung, sodass eine Winkelspanne, innerhalb derer sich die jeweilige Drehscheibe bewegt, verhältnismäßig klein ist. Durch die jeweilige Beschleunigung der Drehscheiben entsteht in Zusammenspiel mit der jeweiligen Unwucht 26 beziehungsweise 28 eine radiale Kraftkomponente $F_{rad}$ (FIG 2) und eine tangentiale Kraftkomponente $F_{tan}$. Dabei werden die Drehscheiben in entgegengesetzter Richtung, insbesondere Drehrichtung bewegt, insbesondere gedreht, sodass sich die Kräfte zu einer gemeinsamen, resultierenden und auch als Gesamtkraft bezeichneten Kraft $F_{Gesamt}$ addiert. Weil die Beschleunigungen einander spiegelbildlich entgegen gerichtet sind, ist die Richtung der resultierenden Kraft $F_{Gesamt}$ durch die Addition der Neutralpositionen beziehungsweise der die Neutralpositionen definierenden Vektoren V1 und V2 der Unwuchten 26 und 28 gegeben. Mit anderen Worten, die Wirkungslinie der resultierenden Kraft $F_{Gesamt}$ steht senkrecht auf der jeweiligen Verbindungslinie der Neutralpositionen der beiden Unwuchten 26 und 28. Um bei Bedarf die Richtung der resultierenden Kraft $F_{Gesamt}$ zu verändern, insbesondere zu schwenken, kann die Ausrichtung der Neutralpositionen der Unwuchten 26 und 28 relativ zueinander entsprechend verändert werden. Dies erfolgt dadurch, dass die Dämpfungselemente 30 und 32 relativ zu einander phasenverstellt werden. Dadurch ist es möglich, die Kraft $F_{Gesamt}$, insbesondere ihre Kraftbeziehungsweise Wirkrichtung, in einer senkrecht zur jeweiligen Drehachse 22 beziehungsweise 24 verlaufenden Ebene zumindest nahezu beliebig auszurichten beziehungsweise nach zu justieren, das heißt zu variieren. Hierzu wird die jeweilige Neutralposition der periodischen Bewegung entsprechend neu ausgerichtet, sodass sich die neu gewünschte Wirkungslinie ergibt.

Die Kraft F$_{Gesamt}$ ist eine periodische Kraft, das heißt eine periodisch wirkende Kraft, welche mit einer, insbesondere vorgebbaren beziehungsweise vorgegebenen, Frequenz wirkt. Die Frequenz der Kraft F$_{Gesamt}$ liegt typischerweise in einem Bereich unterhalb von 100 Hertz, insbesondere in einem Bereich um 30 Hertz.

FIG 2 zeigt eine zweite Ausführungsform der Vorrichtung 20. Im Gegensatz zur ersten Ausführungsform ist es bei der zweiten Ausführungsform vorgesehen, dass die Drehachsen 22 und 24 voneinander beabstandet angeordnet sind und dabei parallel zueinander verlaufen. In FIG 2 sind die Vektoren V1 und V2 mit r bezeichnet.

Beispielsweise ist es bei der zweiten Ausführungsform vorgesehen, dass dem Dämpfungselement 30 ein in FIG 2 besonders schematisch dargestellter erster Elektromotor 42 zugeordnet ist, mittels welchem das Dämpfungselement 30 antreibbar und dadurch um die Drehachse 22 relativ zu dem Maschinenelement 18 drehbar ist. Dem Dämpfungselement 32 ist ein zusätzlich zu dem Elektromotor 42 vorgesehener, zweiter Elektromotor 44 zugeordnet, mittels welchem das Dämpfungselement 32 antreibbar und dadurch um die Drehachse 24 relativ zu dem Maschinenelement 18 drehbar ist. Die Elektromotoren 42 und 44 sind Bestandteile der Antriebseinrichtung 34.

In Zusammenschau mit FIG 1 ist erkennbar, dass die Vorrichtung 20 eine elektronische Recheneinrichtung 46 aufweist, welche vorzugsweise dazu ausgebildet ist, die Antriebseinrichtung 34, insbesondere die Elektromotoren 42 und 44, anzusteuern und dadurch zu betreiben, insbesondere zu steuern oder zu regeln. Dabei ist die elektronische Recheneinrichtung 46 Bestandteil der Stelleinrichtung 40, sodass die Phasenverstellung der Dämpfungselemente 30 und 32 relativ zueinander mittels der elektronischen Recheneinrichtung 46, insbesondere automatisch, bewirkt werden kann.

Die Vorrichtung 20 weist dabei beispielsweise einen in FIG 1 besonders schematisch dargestellten Schwingungssensor 48 auf, mittels welchem Schwingungen des Maschinenelements 18 erfassbar und wenigstens ein die erfassten Schwingungen charakterisierendes, insbesondere elektrisches, Signal bereitstellbar ist. Insbesondere ist der Schwingungssensor 48 dazu ausgebildet, entlang zweier senkrecht zueinander verlaufender Achsen oder Richtungen verlaufende Schwingungen des Maschinenelements 18 zu erfassen. Die elektrische Recheneinrichtung 46 ist dabei dazu ausgebildet, das von dem Schwingungssensor 48 bereitgestellte Signal zu empfangen und die Antriebseinrichtung 34 in Abhängigkeit von dem Signal anzusteuern.

Dabei hat es sich insbesondere im Hinblick auf die zweite Ausführungsform als besonders vorteilhaft gezeigt, wenn die elektronische Recheneinrichtung 46 dazu ausgebildet ist, die Elektromotoren 42 und 44, insbesondere in Abhängigkeit von dem empfangenen Signal, anzusteuern und dadurch die Phasenverstellung der Dämpfungselemente 30 und 32 relativ zueinander zu bewirken. Dadurch kann beispielsweise die Phasenverstellung, insbesondere ausschließlich, ansteuer- beziehungsweise signaltechnisch und somit ohne zusätzliche Aktoren, bewirkt werden.

Der jeweiligen Elektromotor 42 beziehungsweise 44 ist beispielsweise als ein dynamisch steuerbarer oder regelbarer Elektromotor ausgebildet. Insbesondere kann der jeweilige Elektromotor 42 beziehungsweise 44 als Reservemotor ausgebildet sein. Beispielsweise werden die einfach auch als Motoren bezeichneten Elektromotoren 42 und 44 dann mit einem beziehungsweise mit spiegelbildlich entgegen gerichteten Beschleunigungsprofilen angesteuert, um die zueinander spiegelbildlich verlaufenden Drehungen der Drehscheiben zu bewirken.

Als besonders vorteilhaft hat es sich jedoch gezeigt, die schnellen, periodischen Drehbewegungen der Drehscheiben durch einen einzigen, den Drehscheiben gemeinsamen Elektromotor 50 zu erzeugen, das heißt zu bewirken. Hierzu zeigt FIG 3 eine dritte Ausführungsform, bei welcher die Antriebseinrichtung 34 den den Dämpfungselementen 30 und 32 gemeinsamen Elektromotor 50 zum Antreiben der Dämpfungselemente 30 und 32 umfasst. Dabei können die vorherigen und folgenden Ausführungen zu den Elektromotoren 42 und 44 ohne weiteres auch auf den Elektromotor 50 übertragen werden und umgekehrt.

Der Elektromotor 50 weist einen Stator 52 auf, welcher auch als Motorstator bezeichnet wird. Außerdem weist der Elektromotor 50 einen auch als Motorrotor bezeichneten Rotor 54 auf, welcher von dem Stator 52 antreibbar und dadurch um eine Motordrehachse 55 relativ zu dem Stator 52 drehbar ist. Dabei fällt die Motordrehachse 55 mit den Drehachsen 22 und 24 zusammen. Aus FIG 3 ist erkennbar, dass das Dämpfungselement 30 drehfest mit dem Rotor 54 verbunden ist beziehungsweise Bestandteil des Rotors 54 ist, während das Dämpfungselement 32 drehfest mit dem Stator 52 verbunden ist beziehungsweise Bestandteil des Stators 52 ist. Beispielsweise ist eine erste Trägheit mit T1 oder J1 bezeichnet, während eine zweite Trägheit mit T2 oder J2 bezeichnet ist. die erste Trägheit ist beispielsweise eine erste Rotationsträgheit beziehungsweise ein erstes Trägheitsmoment, wobei die zweite Trägheit beispielsweise eine zweite Rotationsträgheit beziehungsweise ein zweites Trägheitsmoment ist. Die erste Trägheit ist beispielsweise eine Trägheit des Dämpfungselements 30, insbesondere zusammen mit der Unwucht 26. Ferner ist es denkbar, dass die erste Trägheit eine Trägheit eines Verbunds ist, welcher den Rotor 54 und das damit drehfest verbundene Dämpfungselement 30 umfasst. Die zweite Trägheit ist beispielsweise eine Trägheit des Dämpfungselements 32. Insbesondere kann die zweite Trägheit eine Trägheit eines zweiten Verbunds sein, welcher den Stator 52 und das damit drehfest verbundene Dämpfungselement 32 umfasst. In FIG 1 und 3 ist das zuvor genannte und in FIG 1 und 3 mit 56 bezeichnete Lager erkennbar, über welches die Dämpfungselemente 30 und 32, insbesondere die Vorrichtung 20, insbesondere drehbar, an dem Maschinenelement 18 gelagert ist. Das Lager 56 umfasst beispielsweise ein erstes Lagerelement 58 und ein zweites Lagerelement 60, wobei die Lagerelemente 58 und 60 beispielsweise in axialer Richtung und somit entlang der jeweiligen Drehachse 22 beziehungsweise 24 voneinander beabstandet sind. Insbesondere ist es vorgesehen, dass die Dämpfungselemente 30 und 32 in axialer Richtung zwischen den Lagerelementen 58 und 60 angeordnet sind. Das jeweilige Lagerelement 58 beziehungsweise 60 kann beispielsweise ein Wälzlager oder aber ein Gleitlager sein.

Bei der dritten Ausführungsform ist beispielsweise der Rotor 54 über das Lager 56 drehbar an dem Maschinenelement 18 gelagert und dabei an dem Maschinenelement 18 gehalten.

Außerdem ist aus FIG 1 ein Fundament 62 erkennbar, an welchem die Werkzeugmaschine 12, insbesondere in vertikaler Richtung nach unten, abgestützt ist. Insbesondere steht die Werkzeugmaschine 12 auf dem Fundament 62 und/oder ist an dem Fundament 62 befestigt. Dabei ist es vorzugsweise vorgesehen, dass die Vorrichtung 20 ausschließlich über die Werkzeugmaschine 12 an dem Fundament 62 abgestützt ist.

Wird nun beispielsweise mittels des Elektromotors 50 gemäß der dritten Ausführungsform ein auch als Antriebsdrehmoment bezeichnetes Drehmoment bereitgestellt und auf den Rotor 54 und somit auf eine auch als Welle oder Motorwelle bezeichnete Rotorwelle 64 des Rotors 54 ausgeübt, so erzeugt der Elektromotor 50 unweigerlich exakt zur gleichen Zeit ein dem Antriebsmoment entgegengesetztes und somit entgegen wirkendes Gegendrehmoment in exakt demselben Ausmaß wie das Antriebsdrehmoment, wobei das Gegendrehmoment auf den Stator 52 wirkt, gemäß dem Prinzip Aktio = Reaktio. Mit anderen Worten, jedes Newtonmeter Drehmoment wird zweimal wirksam, einmal als Antriebsdrehmoment, welches auf den Rotor 54 wirkt, und einmal als Gegendrehmoment und somit als prompte Gegenreaktion, die auf den Stator 52 wirkt. Das Antriebsdrehmoment und das Gegendrehmoment weisen dabei, insbesondere exakt, den gleichen Betrag, jedoch entgegengesetzte Wirk- beziehungsweise Drehrichtungen auf. Da nun beispielsweise das Dämpfungselement 30 drehfeste mit dem Rotor 54 und das Dämpfungselement 32 drehfest mit dem Stator 52 verbunden ist, dann ist, insbesondere automatisch, dafür gesorgt, dass die beiden Drehscheiben stets Drehmomente von exakt demselben Betrag aber in entgegengesetzter Richtung exakt gleichzeitig empfangen. Dabei ist lediglich noch sicher zu stellen, dass die obige Gleichung

$$a1(t) = -\alpha \cdot a2(t)$$

erfüllt ist. Dies lässt sich durch entsprechende Dimensionierung der Trägheiten J1 und J2 beziehungsweise der Trägheitsmomente der genannten Verbunde erreichen. Dadurch kann beispielsweise in einer Regel oder Steuerung zum Regeln beziehungsweise Steuern der Antriebseinrichtung 34 ein Synchronisierungsaufwand entfallen, denn die Unwuchten 26 beziehungsweise 28 und die aus den Unwuchten 26 beziehungsweise 28 resultierenden Kräfte sind zwangläufig symmetrisch zueinander.

Um die Wirkungsrichtung der resultierenden Kraft $F_{Gesamt}$ in eine gewünschte Richtung zu verstellen, kann beispielsweise ein kleiner Stellantrieb an dem Rotor 54, insbesondere an der Rotorwelle 64 angebracht werden beziehungsweise auf den Rotor 54, insbesondere auf die Rotorwelle 64, wirken. Dieser Stellantrieb ist in FIG 3 besonders schematische dargestellt und mit 66 bezeichnet. Der Stellantrieb 66 ist beispielsweise Bestandteil der Stelleinrichtung 40 und ein zusätzlich zu der Antriebseinrichtung 34 und somit zusätzlich zu dem Elektromotor 50 vorgesehener Aktor, mittels welchem die Phasenverstellung der Dämpfungselemente 30 und 32 relativ zueinander bewirkbar ist. Dabei ist beispielsweise die elektronische Recheneinrichtung 46 dazu ausgebildet, den Stellantrieb 66, insbesondere in Abhängigkeit von dem Signal, anzusteuern und dadurch eine Phasenverstellung der Dämpfungselemente 30 und 32 beziehungsweise des Stators 52 und des Rotors 54 relativ zueinander zu bewirken. Der Stellantrieb 66 stützt sich beispielsweise an den beziehungsweise auf das Maschinenelement 18 ab und übt bei Bedarf einen Impuls, insbesondere einen Drehmoment- oder Kraftimpuls, auf den Rotor 54 beziehungsweise auf das Dämpfungselement 30 aus, sodass sich die Neutralpositionen der Drehscheiben, insbesondere einmalig, um eine gewünschten Winkel weiterdrehen beziehungsweise relativ zueinander verstellen.

Um ein unerwünschtes Auseinanderdriften der Drehscheiben gegeneinander zu verhindern, kann eine beispielsweise als Torsionsfeder ausgebildete, schwache Rückholfeder zwischen dem Rotor 54 und dem Stator 52 angebracht werden. Diese Rückholfeder ist in FIG 3 besonders schematisch dargestellt und mit 68 bezeichnet. Dabei ist aus FIG 3 erkennbar, dass beispielsweise der Rotor 54 und der Stator 52 über die Rückholfeder 68 miteinander gekoppelt sind.

Im Folgenden werden anhand von FIG 4 und 5 mögliche Regelung der Vorrichtung 20 erläutert. Wie zuvor bereits angedeutet, ist an dem zu dämpfenden Maschinenelement 18 der beispielsweise als 2D-Schwingungssensor ausgebildete Schwingungssensor 48 angebracht. Der Schwingungssensor 48 weist wenigstens oder genau zwei senkrecht zueinander verlaufende Messrichtungen auf, entlang welchen der Schwingungssensor 48 Schwingungen des Maschinenelements 18 erfassen, das heißt messen kann. Eine erste der Messrichtungen wird auch als x-Richtung bezeichnet, während die zweite Messrichtung auch als y-Richtung bezeichnet wird. Die Messrichtungen stehen vorzugsweise senkrecht aufeinander. Der einfach auch als Sensor bezeichnete Schwingungssensor 48 ist vorzugsweise ein Beschleunigungssensor oder aber ein Geschwindigkeitssensor. Vorteilhaft ist, wenn der Sensor die Schwingungen des Maschinenelements 18 absolut im Raum misst und nicht etwa relativ zu dem Maschinenelement 18, welches mittels der auch als Aggregat bezeichneten Vorrichtung 20 gedämpft werden soll.

Das von dem Sensor bereitstellbare oder bereitgestellte und beispielsweise als elektrisches Signal ausgebildete Signal, welches die erfassten Schwingungen charakterisiert, wird auch als Schwingungssignal bezeichnet. Das Schwingungssignal kann, insbesondere theoretisch, in Amplitude und Phase zerlegt werden. Ziel der mittels der auch als Dämpfungsaggregat bezeichneten Vorrichtung 20 zu bewirkenden Dämpfung kann jedoch eine Minimierung des Schwingungssignals sein, sodass eine das Schwingungssignal in Amplitude und Phase zerlegende Berechnung kein stabiles Signal liefern wird. aus diesem Grund kommen beispielsweise ein aus FIG 4 erkennbarer Orientierungsregler 70 und ein Dämpfungsregler 72 zum Einsatz. Der Orientierungsregler 70 ermittelt aus dem Schwingungssignal und einer jeweiligen aktuellen Orientierung des jeweiligen Dämpfungselements 30 beziehungsweise 32, insbesondere der jeweiligen Unwucht 26 beziehungsweise 28, unter Umständen eine erforderliche Neu-Orientierung des jeweiligen Dämpfungselements 30 beziehungsweise 32, insbesondere der jeweiligen Unwucht 26 beziehungsweise 28. Beispielsweise wird das Schwingungssignal in ein erstes Teilsignal und ein zweites Teilsignal aufgeteilt oder aber der Sensor stellt ein erstes Teilsignal und ein zweites Teilsignal bereit. Das erste Teilsignal charakterisiert beispielsweise entlang einer ersten der Messrichtungen verlaufende und mittels des Sensors erfasste Schwingungen, und das zweite Teilsignal charakterisiert beispielsweise entlang der zweiten Messrichtung verlaufende und mittels des Sensors erfasste Schwingungen des Maschinenelements 18. Das von dem Schwingungssensor 48 bereitgestellte Signal beziehungsweise die von dem Schwingungssensor 48 bereitgestellten Signale oder Teilsignale sind in FIG 4 und 5 durch ein mit 74 bezeichnetes 2D-Schwingungssignal bezeichnet. Des Weiteren ist aus FIG 4 und 5 erkennbar, dass beispielsweise dem jeweiligen Elektromotor 42, 44 beziehungsweise 50 ein auch als Geber 76 beziehungsweise 78 zugeordneter Sensor zugeordnet ist, mittels welchem eine jeweilige Drehstellung und somit die jeweilige, zuvor genannte Orientierung des jeweiligen Dämpfungselements 30 beziehungsweise 32 und somit der jeweiligen Unwucht 26 beziehungsweise 28 erfasst werden kann. Der jeweilige Geber 76 beziehungsweise 78 stellt ein, insbesondere elektrisches, Signal 80 beziehungsweise 82 bereit, welches die jeweilige erfasste Orientierung charakterisiert. Die jeweilige Orientierung ist beispielsweise eine jeweilige Drehstellung, welche auch als Drehposition oder Drehwinkel des jeweiligen Dämpfungselements 30 beziehungsweise 32, insbesondere der jeweiligen Unwucht 26 beziehungsweise 28, bezeichnet wird.

Der Orientierungsregler 70 findet beispielsweise eine benötigte Ausrichtung der Vorrichtung 20, das heißt der Dämpfungselemente 30 und 32 relativ zueinander von alleine. Die aktuelle Orientierung der Vorrichtung 20 ist anhand der Geber 76 und 78, insbesondere anhand der Signale 80 und 82, bekannt, wobei die Geber 76 und 78 auch als Winkelgeber bezeichnet werden.

Aus FIG 4 und 5 ist eine auch als Mechanik bezeichnete Abstützeinrichtung 84 erkennbar. Dabei stützen die Elektromotoren 42 und 44 ihre jeweiligen Drehmomente an oder auf der Mechanik ab und erzeugen so eine gerichtete Kraft, welche zur Schwingungsdämpfung eingesetzt wird. Der Dämpfungsregler 72 gibt beispielsweise ein Dämpfungssignal 86, insbesondere einen Sollwert für das Dämpfungssignal 86, vor, auf welches beziehungsweise welchen, insbesondere die Elektromotoren 42 und 44, geregelt werden. Die Regelung des Dämpfungssignals 86 ist beispielsweise Stand der Technik. FIG 4 veranschaulicht beispielsweise die Regelung der Vorrichtung 20 gemäß FIG 2 mit den zwei Elektromotoren 42 und 44. FIG 5 veranschaulicht beispielsweise die Regelung der Vorrichtung 20 gemäß FIG 3 mit dem Elektromotor 50 und dem beispielsweise als weiterer Elektromotor ausgebildeten Stellantrieb 66. Diese unterschiedlichen Ausführungsformen können leicht unterschiedliche Reglerstrukturen erfordern.

Bei der in FIG 4 veranschaulichten Regelung wird das Dämpfungssignal 86 auf beide Elektromotoren 42 und 44 aufgeschaltet. Dabei erhält der Elektromotor 44 den invertierten Sollwert, welcher um einen auch als Offset bezeichneten Versatz verschoben wird. Dieser Versatz entspricht beispielsweise der Ausrichtung der beiden Unwuchten 26 und 28 gegeneinander und wird üblicherweise aber nicht zwingen 180 Grad betragen. Der Versatz muss nicht zwingend zeitlich konstant sein. Der mittels des jeweiligen Gebers 76 beziehungsweise 78 erfasste und auch als Orientierungswinkel bezeichnete Drehwinkel wird beispielsweise als zusätzlicher Sollwert auf jeweilige Regler 88 und 90 der Elektromotoren 42 und 44 aufgeschaltet. Diese Regler 88 und 90 zum Regeln der Elektromotoren 42 und 44 werden üblicherweise Kaskadenregler aus Strom-, Drehzahl- und Lageregelung sein, wie sie in der Industrie bei der Regelung von elektrisch angetriebenen mechanischen Achsen üblich sind. Außerdem ist aus FIG 4 erkennbar, dass der Orientierungsregler 70 einen Sollwert 92 für die jeweilige Orientierung des jeweiligen Dämpfungselements 30 beziehungsweise 32 vorgibt, wobei die Elektromotoren 42 und 44 mittels der Regler 88 und 90 auf diesen Sollwert 92 geregelt werden. Auch der Versatz ist aus FIG 4 erkennbar und dort mit 49 bezeichnet.

Bei der in FIG 5 veranschaulichten Regelung wird das Dämpfungssignal 86 beziehungsweise der Sollwert 92 von dem Elektromotor 50 umgesetzt, während der Sollwert 92 beziehungsweise das von dem Orientierungsregler 70 vorgegebenen Orientierungssignal von dem Stellantrieb 66 umgesetzt wird. Die Regelung der Orientierung der Vorrichtung 20 und die Dämpfung der Schwingung des Maschinenelements 18 beziehungsweise die Regelung der Dämpfung sind hier getrennt. Bei beiden Regelungen jedoch haben die Elektromotoren 42 und 44 beziehungsweise der Elektromotor 50 und der Stellantrieb 66 einen jeweils eigenen Regler 88 beziehungsweise 90 zur Umsetzung des jeweiligen Sollwerts und hierzu eine jeweiligen Geber 76 beziehungsweise 78, mittels welchem eine jeweilige Drehstellung und somit die jeweilige Orientierung des jeweiligen Rotors des jeweiligen Motors erfassbar ist beziehungsweise erfasst wird.

Insgesamt ist erkennbar, dass die Vorrichtung 20 die Erzeugung eines Kraftvektors in einer beliebigen Richtung in einer Ebene senkrecht zu der jeweiligen Drehachse 22 beziehungsweise 24 ermöglicht, wodurch eine Schwingungsdämpfung und wenigstens oder genau zwei Dimensionen, das heißt entlang der Achsen ermöglicht wird. Außerdem kann auf eine Veränderung der Schwingungsrichtung durch eine kontinuierliche Neu-Ausrichtung des Kraftvektors reagiert werden. Die Kraft zum Dämpfen der Schwingungen wird durch die Drehung der zwei Drehscheiben erzeugt. Die Drehmomente auf diese beiden Drehscheiben können so gesteuert werden, dass das Gesamtsystem der beiden Scheiben drehmomentfrei ist. Gegenüber einem Aggregat mit zwei Linearmotoren können sich einbautechnische Vorteile ergeben. Durch die jeweilige Drehachse 22 beziehungsweise 24 der Drehscheiben beziehungsweise Drehmotoren könnte zum Beispiel eine Kabeldurchführung vorgesehen werden. Die drehenden Drehscheiben beziehungsweise Motoren können endlos drehend ausgeführt werden. Dadurch benötigt man keine Endanschläge und hat keine Limitierung der Bewegungsamplitude, wie sie bei Linearmotoren auftritt.

Idealerweise strebt man einen möglichst symmetrischen Aufbau der beiden Motoren und der beiden Dämpfungselement 30 und 32 an, welche als Umbruchscheiben ausgebildet sind. Unter einem solchen symmetrischen Aufbau sind gleiche Trägheitsmomente und gleiche Unwuchten zu verstehen. Dies ist aber nicht zwingend erforderlich, insbesondere dann, wenn beispielsweise die zweite Ausführungsform beziehungsweise eine Ausführungsform mit den zwei Elektromotoren 42 und 44 verwendet wird. Bei einem symmetrischen Aufbau kann hinsichtlich der Regelung eine Kenntnis über die Dimension einer etwaigen Asymmetrie vorteilhaft sein, sodass genaue Kenntnisse über die Unwuchten 26 und 28 und die Trägheiten vorteilhaft sind, um korrekte beziehungsweise vorteilhafte Sollwerte für die beiden, auch als Motorregler bezeichneten Regler 88 und 90 berechnen und vorgeben zu können.

Die Ausrichtung der beiden Unwuchten 26 und 28 in ihren auch als Grundstellungen bezeichneten Neutralpositionen ist vorzugsweise 180 Grad versetzt, weil dann die Gleichung für die resultierende Kraft $F_{Gesamt}$ näherungsweise linear ist und man eine besonders vorteilhafte Kraftentfaltung bekommt. Man kann aber auch andere Winkelstellungen nutzen und bekommt trotzdem einen vergleichbaren Effekt. Insbesondere wäre es denkbar, die Ausrichtung der beiden Drehscheiben zueinander zumindest im Wesentlichen kontinuierlich zu variieren. Die Grundausrichtung der Unwuchten 26 und 28 in der Ebene kann gesteuert werden, wenn die dominante Richtung der Störkraft bekannt ist. Dann ist kein Orientierungsregler erforderlich, der die Orientierung von alleine findet, sondern man stellt die Orientierung über einen einfachen Lageregler auf den Sollwert.

**Patentansprüche**

1. Vorrichtung (20) zum aktiven Dämpfen von Schwingungen wenigstens eines Maschinenelements (18), mit:

   - zwei um jeweilige Drehachsen (22, 24) relativ zu dem Maschinenelement (18) drehbaren und jeweils eine Unwucht (26, 28) aufweisenden Dämpfungselementen (30, 32);
   - einer Antriebseinrichtung (34), mittels welcher die Dämpfungselemente (30, 32) antreibbar und dadurch gegensinnig um die Drehachsen (22, 24) drehbar sind, wodurch eine in einer senkrecht zu den Drehachsen verlaufenden Ebene wirkende Kraft zum Dämpfen der Schwingungen erzeugbar ist; und
   - einer Stelleinrichtung (40), mittels welcher die Dämpfungselemente (30, 32) relativ zueinander phasenverstellbar sind, wodurch eine in der Ebene verlaufende Wirkrichtung der Kraft einstellbar ist.

2. Vorrichtung (20) nach Anspruch 1, wobei die Drehachsen (22, 24) zusammenfallen.

3. Vorrichtung (20) nach Anspruch 1, wobei die Drehachsen (22, 24) voneinander beabstandet sind und parallel zueinander verlaufen.

4. Vorrichtung (20) nach einem der vorhergehenden Ansprüche, wobei die Vorrichtung (20) eine elektronische Recheneinrichtung (46) umfasst.

5. Vorrichtung (20) nach Anspruch 4, wobei die elektronische Recheneinrichtung (46) dazu ausgebildet ist, die Antriebseinrichtung (34) anzusteuern und dadurch zu betreiben, insbesondere zu steuern oder zu regeln.

6. Vorrichtung (20) nach Anspruch 5, wobei die Vorrichtung (20) einen Schwingungssensor (48) aufweist, mittels welchem, insbesondere entlang zweier Achsen verlaufende, Schwingungen des Maschinenelements (18) erfassbar sind und wenigstens ein die erfassten Schwingungen charakterisierendes, insbesondere elektrisches, Signal (74) bereitstellbar ist, wobei die elektronische Recheneinrichtung (46) dazu ausgebildet ist, das Signal (74) zu empfangen und die Antriebseinrichtung (34) in Abhängigkeit von dem Signal (74) anzusteuern.

7. Vorrichtung (20) nach einem der Ansprüche 4 bis 6, wobei die elektronische Recheneinrichtung (46) Bestandteil der Stelleinrichtung (40) ist.

8. Vorrichtung (20) nach einem der vorhergehenden Ansprüche,
wobei die Antriebseinrichtung (34) einen ersten Elektromotor (42), mittels welchem das erste Dämpfungselement (30) antreibbar ist, und einen zweiten Elektromotor (44) umfasst, mittels welchem das zweite Dämpfungselement (32) antreibbar ist.

9. Vorrichtung (20) nach den Ansprüchen 5, 7 und 8 oder nach den Ansprüchen 6, 7 und 8,
wobei die elektronische Recheneinrichtung (46) dazu ausgebildet ist, die Elektromotoren (42, 44) anzusteuern und dadurch eine Phasenverstellung der Dämpfungselemente (30, 32) relativ zueinander zu bewirken.

10. Vorrichtung (20) nach Anspruch 7,
wobei die Stelleinrichtung (40) einen zusätzlich zu der Antriebseinrichtung (34) vorgesehenen Aktor (66) aufweist, und wobei die elektronische Recheneinrichtung (46) dazu ausgebildet ist, den Aktor (66) anzusteuern und dadurch eine Phasenverstellung der Dämpfungselemente (30, 32) relativ zueinander zu bewirken.

11. Vorrichtung (20) nach Anspruch 10 oder nach einem der Ansprüche 1 bis 7,
wobei die Antriebseinrichtung (34) einen den Dämpfungselementen (30, 32) gemeinsamen Elektromotor (50) zum Antreiben der Dämpfungselemente (30, 32) umfasst.

12. Vorrichtung (20) nach Anspruch 11,
wobei der eine Elektromotor (50) einen Stator (52) und einen von dem Stator (52) antreibbaren und dadurch um eine Motordrehachse (55) relativ zu dem Stator (52) drehbaren Rotor (54) aufweist, und wobei eines der Dämpfungselemente (30, 32) drehfest mit dem Stator (52) und das andere Dämpfungselement (32) drehfest mit Rotor (54) verbunden ist.

13. Vorrichtung (20) nach Anspruch 12,
wobei der Stator (52) und der Rotor (54) über eine Rückholfeder (68), insbesondere über eine Torsionsfeder, miteinander gekoppelt sind.

14. Werkzeugmaschineneinrichtung (10), mit wenigstens einer Werkzeugmaschine (12) zum Bearbeiten von Werkstücken, und mit wenigstens einer Vorrichtung (20) zum aktiven Dämpfen von Schwingungen wenigstens eines Maschinenelements (18) der Werkzeugmaschine (12), wobei die Vorrichtung (20) aufweist:

- zwei um jeweilige Drehachsen (22, 24) relativ zu dem Maschinenelement (18) drehbare und jeweils eine Unwucht (26, 28) aufweisende Dämpfungselemente (30, 32);
- eine Antriebseinrichtung (34), mittels welcher die Dämpfungselemente (30, 32) antreibbar und dadurch gegensinnig um die Drehachsen (22, 24) drehbar sind, wodurch eine in einer senkrecht zu den Drehachsen verlaufenden Ebene wirkende Kraft zum Dämpfen der Schwingungen erzeugbar ist; und
- eine Stelleinrichtung (40), mittels welcher die Dämpfungselemente (30, 32) relativ zueinander phasenverstellbar sind, wodurch eine in der Ebene verlaufende Wirkrichtung der Kraft einstellbar ist.

15. Verfahren zum aktiven Dämpfen von Schwingungen wenigstens eines Maschinenelements (18) mittels einer Vorrichtung (20), bei welchem:

- zwei um jeweilige Drehachsen (22, 24) relativ zu dem Maschinenelement (18) drehbare und jeweils eine Unwucht (26, 28) aufweisende Dämpfungselementen (30, 32) der Vorrichtung (20) mittels einer Antriebseinrichtung (34) der Vorrichtung (20) angetrieben und dadurch gegensinnig zueinander um die Drehachsen (22, 24) gedreht werden, wodurch eine in einer senkrecht zu den Drehachsen verlaufenden Ebene wirkende Kraft zum Dämpfen der Schwingungen erzeugt wird; und
- mittels einer Stelleinrichtung (40) der Vorrichtung (20) die Dämpfungselemente (30, 32) relativ zueinander phasenverstellt werden, wodurch eine in der Ebene verlaufende Wirkrichtung der Kraft eingestellt wird.

FIG 1

## FIG 2

## FIG 3

FIG 4

FIG 5

Europäisches Patentamt

European Patent Office

Office européen des brevets

# EUROPÄISCHER RECHERCHENBERICHT

Nummer der Anmeldung

EP 19 16 6207

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 477 870 A2 (MITUTOYO CORP [JP]) 17. November 2004 (2004-11-17) | 1-7,11, 14,15 | INV. B23Q11/00 G05B19/404 |
| A | * Absätze [0089] - [0115]; Abbildungen 1,3-5 * ----- | 8-10,12, 13 | |
| A | WO 00/35629 A1 (DENTATUS AB [SE]; ERIKSSON ROLF [SE]) 22. Juni 2000 (2000-06-22) * Seite 8, Zeile 13 - Seite 12, Zeile 19; Abbildungen 1-6 * ----- | 1-15 | |

RECHERCHIERTE SACHGEBIETE (IPC)

B23Q
G05B

Der vorliegende Recherchenbericht wurde für alle Patentansprüche erstellt

| Recherchenort | Abschlußdatum der Recherche | Prüfer |
|---|---|---|
| Den Haag | 15. Oktober 2019 | Groen, Fokke |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 6207

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2019

| Im Recherchenbericht angeführtes Patentdokument | | Datum der Veröffentlichung | Mitglied(er) der Patentfamilie | | Datum der Veröffentlichung |
|---|---|---|---|---|---|
| EP 1477870 | A2 | 17-11-2004 | CN | 1573159 A | 02-02-2005 |
| | | | EP | 1477870 A2 | 17-11-2004 |
| | | | JP | 2004341608 A | 02-12-2004 |
| | | | US | 2004267407 A1 | 30-12-2004 |
| WO 0035629 | A1 | 22-06-2000 | KEINE | | |

EPO FORM P0461

Für nähere Einzelheiten zu diesem Anhang : siehe Amtsblatt des Europäischen Patentamts, Nr.12/82